# EUROPÄISCHE PATENTSCHRIFT

(11) **EP 4 196 370 B1**
(45) Veröffentlichungstag und Bekanntmachung des Hinweises auf die Patenterteilung: **18.03.2026**
(21) Anmeldenummer: 21758319.4
(22) Anmeldetag: 27.07.2021
(51) Int. Cl.: B60R 21/013, B60R 21/015, B60R 21/231, B60R 21/239, B60R 21/01

(54) **SEITENAIRBAGVORRICHTUNG FÜR EIN KRAFTFAHRZEUG, SOWIE VERFAHREN ZUM BETREIBEN EINER SEITENAIRBAGVORRICHTUNG**
SIDE AIRBAG DEVICE FOR A MOTOR VEHICLE, AND METHOD FOR OPERATING A SIDE AIRBAG DEVICE
DISPOSITIF DE COUSSIN DE SÉCURITÉ GONFLABLE LATÉRAL POUR VÉHICULE AUTOMOBILE ET PROCÉDÉ DE FONCTIONNEMENT D'UN DISPOSITIF DE COUSSIN DE SÉCURITÉ GONFLABLE LATÉRAL

(30) Priorität: 13.08.2020 DE 102020004920
(43) Veröffentlichungstag der Anmeldung: 21.06.2023
(73) Patentinhaber: Mercedes-Benz Group AG, 70372 Stuttgart (DE)
(72) Erfinder: TENKAP MFOUBI, Olivier, Frank, 71134 Aidlingen (DE); RIEDER, Jan, 71032 Böblingen (DE); WALZ, Matthias, 72138 Kirchentellinsfurt (DE)
(74) Vertreter: Novagraaf Group
(86) Internationale Anmeldenummer: PCT/EP2021/071005
(87) Internationale Veröffentlichungsnummer: WO 2022/033866

(56) Entgegenhaltungen:
- EP-A1- 3 459 796
- DE-A1- 102008 014 036

## Beschreibung

Die Erfindung betrifft eine Seitenairbagvorrichtung für ein Kraftfahrzeug mit zumindest einem Gassack gemäß dem Oberbegriff von Patentanspruch 1. Ferner betrifft die Erfindung ein Verfahren zum Betreiben einer Seitenairbagvorrichtung.

Aus dem Stand der Technik sind bereits Seitenairbagvorrichtungen, welche auch nur als Seitenairbag bezeichnet werden können, bekannt. Diese sind insbesondere in beispielsweise einem entsprechenden Sitz eines Kraftfahrzeugs angeordnet und können bei einem Aufprall mit einem Gas befüllt werden, so dass bei einem seitlichen Aufprall des Kraftfahrzeugs ein Insasse geschützt ist. Ferner ist bekannt, dass unterschiedliche Insassen, beispielsweise Erwachsene und Kinder, innerhalb des Kraftfahrzeugs sein können, wobei dann unterschiedliche Anforderungen an den Seitenairbag gestellt sind.

Die DE 10 2009 016 606 A1 betrifft einen Fahrzeugsitz für ein Kraftfahrzeug mit einer Rücklehne, an welcher an Seitengassack mit einer ersten, zum Insassen weisenden Seitenwand und einer zweiten, zur Fahrzeugaußenseite weisenden Seitenwand angeordnet ist, wobei der Seitengassack an der Seite der Rückenlehne angeordnet ist, welche zur Außenseite des Kraftfahrzeugs zeigt, und wobei der Seitengassack an einer der beiden Seitenwände eine erste Ventilationsöffnung aufweist, die bei Anliegen an einem Objekt zumindest gedrosselt wird. Um eine Anpassung des Innendrucks des Gassacks an das Gewicht des Fahrzeuginsassen zu erreichen, ist der Fahrzeugsitz höhenverstellbar, und die erste Ventilationsöffnung ist in der zweiten Seitenwand angeordnet.

In der DE 10 2015 005 482 A1 ist ein Gassack mit einer adaptiven Ventilationseinrichtung beschrieben. Hierbei weist die Gassackhülle des Gassacks wenigstens eine Ventilationsöffnung auf. Weiter sind ein einer Ventilationsöffnung zugeordnetes Zugelement und ein außerhalb der Gassackhülle angeordnetes, der Ventilationsöffnung zugeordnetes Abdeckelement vorgesehen, wobei ein erstes Ende des Zugelements dauerhaft mit der Gassackhülle oder lösbar oder trennbar mit einem Halteelement und ein zweites Ende des Zugelements dauerhaft mit dem Abdeckelement verbunden sind und wobei bei gespanntem Zugelement das Abdeckelement die Ventilationsöffnung stärker drosselt als bei nicht gespanntem Zugelement. Um die Reproduzierbarkeit des Verhaltens des Gassacks zu verbessern, ist das Abdeckelement um die Ventilationsöffnung herum mit der Gassackhülle mit einer Verbindung verbunden, so dass die von der Verbindung umschlossene geometrische Fläche der Gassackhülle einen ersten Flächeninhalt aufweist. Hierbei weist die von der Verbindung umschlossene geometrische Fläche des Abdeckelements einen zweiten Flächeninhalt auf, welcher größer ist als der erste Flächeninhalt. Weiterhin weist das Abdeckelement wenigstens eine Durchströmungsöffnung auf.

Die EP 3 459 796 A1 offenbart eine Seitenairbagvorrichtung.

Aufgabe der vorliegenden Erfindung ist es, eine Seitenairbagvorrichtung sowie ein Verfahren zu schaffen, mittels welchen eine verbesserte Anpassung eines Gasdrucks im Gassack realisiert werden kann.

Diese Aufgabe wird durch eine Seitenairbagvorrichtung sowie durch ein Verfahren gemäß den unabhängigen Patentansprüchen gelöst. Vorteilhafte Ausgestaltungsformen sind in den Unteransprüchen angegeben.

Ein Aspekt der Erfindung betrifft eine Seitenairbagvorrichtung für ein Kraftfahrzeug mit zumindest einem Gassack, in welchem bei einem Aufprall ein Gas mittels eines Gasgenerators der Seitenairbagvorrichtung eingebracht wird und mit einem Ablassventil zum Entlüften von dem Gas unmittelbar nach dem Aufprall.

Es ist vorgesehen, dass die Seitenairbagvorrichtung eine elektronische Recheneinrichtung und ein weiteres Ablassventil aufweist, wobei mittels einer Erfassungseinrichtung der Seitenairbagvorrichtung ein Insasse des Kraftfahrzeugs erfasst wird, wobei die Seitenairbagvorrichtung zum Schutz dieses Insassen bei dem Aufprall mit dem Gas befüllt wird und die elektronische Recheneinrichtung dazu ausgebildet ist, in Abhängigkeit von der erfassten Person einen Gasdruck im Gassack durch Ansteuern des weiteren Ablassventils zeitlich vor dem Aufprall zu bestimmen und bei dem Aufprall an den Insassen anzupassen.

Somit ist insbesondere eine adaptive Auslassöffnung an dem Seitenairbag, insbesondere an der Seitenairbagvorrichtung, vorgesehen, die je nach Insasse beziehungsweise Besetzung aktiviert wird, so dass die Möglichkeit gegeben ist, den Druck innerhalb der Seitenairbagvorrichtung während eines insbesondere seitlichen Aufpralls zu steuern. Beispielsweise kann bei einem Kind als Insasse das weitere Ablassventil aktiviert werden, beispielsweise mit Hilfe einer Zündpille. Bei einem Erwachsenen als Insasse bleibt hingegen das weitere Ablassventil geschlossen.

Das weitere Ablassventil weist zumindest drei Öffnungsstellungen auf, wobei eine erste Öffnungsstellung ganzheitlich geöffnet ist, eine zweite Öffnungsstellung eine teilweise Öffnung und eine dritte Öffnungsstellung einen geschlossenen Zustand beschreibt, und in Abhängigkeit von einem Steuersignal der elektronischen Recheneinrichtung ist eine der Öffnungsstellungen bei dem Aufprall angesteuert.

Die Seitenairbagvorrichtung kann einen weiteren Gasgenerator aufweisen, wobei die elektronische Recheneinrichtung dazu ausgebildet sein kann, in Abhängigkeit von der erfassten Person den Gasdruck im Gassack durch Ansteuern weiteren Gasgenerators zeitlich vor dem Aufprall zu bestimmen und bei dem Aufprall an den Insassen anzupassen.

Bei der Ausgestaltungsform des Gasgenerators kann beispielsweise ein weiterer Gasgenerator oder ein zweistufiger Gasgenerator vorgeschlagen werden. Bei der ersten Stufe des Gasgenerators würde die Entfaltung und Positionierung der Seitenairbagvorrichtung unabhängig von der Besetzung des Insassens durchgeführt werden. Die zweite Stufe ist dann je nach Insasse zu zünden. Bei beispielsweise einem Kind als Insasse bleibt die Zündung des zweiten Gasgenerators beziehungsweise zweistufigen Gasgenerators aus, während bei einem Erwachsenen die zweite Stufe gezündet werden kann.

Die erfindungsgemäße Seitenairbagvorrichtung mit der adaptiven Auslassöffnung beziehungsweise dem weiteren Auslassventil ist für alle Insassen, insbesondere für einen weltweiten Einsatz, dadurch verbessert.

Gemäß einer vorteilhaften Ausgestaltungsform ist die elektronische Recheneinrichtung dazu ausgebildet, in Abhängigkeit einer Größe des Insassen und/oder eines Gewichts des Insassen den Gasdruck zu bestimmen. Beispielsweise kann die Erfassungseinrichtung als Kamera oder als Sitzbelegungssensor ausgebildet sein und die Größe beziehungsweise das Gewicht bestimmen.

Weiterhin vorteilhaft ist, wenn die elektronische Recheneinrichtung dazu ausgebildet ist, zusätzlich in Abhängigkeit von einer Aufprallintensität den Gasdruck im Gassack einzustellen.

Weiterhin vorteilhaft ist, wenn zum Erzeugen der zumindest drei Öffnungsstellungen das weitere Ablassventil zumindest eine Abdeckung aufweist, welche in Abhängigkeit des Steuersignals bewegt ist.

Ein weiterer Aspekt der Erfindung betrifft ein Verfahren zum Betreiben einer Seitenairbagvorrichtung für ein Kraftfahrzeug, bei welchem bei einem Aufprall mittels eines Gasgenerators der Seitenairbagvorrichtung ein Gassack der Seitenairbagvorrichtung mit einem Gas gefüllt wird und bei welchem mittels eines Ablassventils das Gas unmittelbar nach dem Aufprall entlüftet wird. Es ist vorgesehen, dass die Seitenairbagvorrichtung eine elektronische Recheneinrichtung und ein weiteres Ablassventil und/oder einen weiteren Gasgenerator aufweist, wobei mittels einer Erfassungseinrichtung der Seitenairbagvorrichtung ein Insasse des Kraftfahrzeugs erfasst wird, wobei die Seitenairbagvorrichtung zum Schutz dieses Insassen bei dem Aufprall mit dem Gas befüllt wird, und die elektronische Recheneinrichtung in Abhängigkeit von der erfassten Person einen Gasdruck im Gassack durch Ansteuern des weiteren Ablassventils des weiteren Gasgenerators vor dem Aufprall bestimmt, und bei dem Aufprall eines Insassen wird der Gasdruck angepasst.

Das weitere Ablassventil weist zumindest drei Öffnungsstellungen auf, wobei eine erste Öffnungsstellung ganzheitlich geöffnet ist, eine zweite Öffnungsstellung eine teilweise Öffnung und eine dritte Öffnungsstellung einen geschlossenen Zustand beschreibt, und in Abhängigkeit von einem Steuersignal der elektronischen Recheneinrichtung ist eine der Öffnungsstellungen bei dem Aufprall angesteuert.

Ein nochmals weiterer Aspekt der Erfindung betrifft ein Kraftfahrzeug mit einer Seitenairbagvorrichtung. Das Kraftfahrzeug ist insbesondere als Personenkraftwagen ausgebildet.

Vorteilhafte Ausgestaltungsformen der Seitenairbagvorrichtung sind als vorteilhafte Ausgestaltungsformen des Kraftfahrzeugs sowie des Verfahrens anzusehen. Die Seitenairbagvorrichtung sowie das Kraftfahrzeug weisen dazu gegenständliche Merkmale auf, um eine Durchführung des Verfahrens und eine vorteilhafte Ausgestaltungsform davon zu ermöglichen.

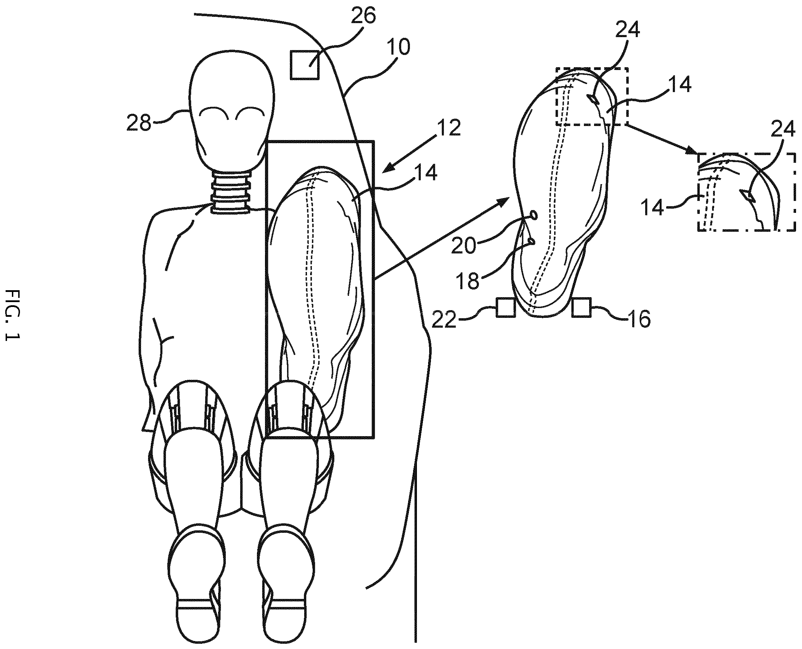

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt die einzige Figur (Fig.) eine schematische Ansicht eines Kraftfahrzeugs mit einer Ausführungsform einer Seitenairbagvorrichtung.

In der Fig. sind gleiche oder funktionsgleiche Elemente mit den gleichen Bezugszeichen versehen.

Die Fig. zeigt in einer schematischen Ansicht ein Kraftfahrzeug 10 mit einer Seitenairbagvorrichtung 12. Die Seitenairbagvorrichtung 12 weist einen Gassack 14 auf, in welchen bei einem Aufprall ein Gas mittels eines Gasgenerators 16 der Seitenairbagvorrichtung 12 eingebracht wird und mit einem Ablassventil 18, 20, vorliegend insbesondere mit zwei Ablassventilen 18, 20, zum Entlüften von dem Gas unmittelbar nach dem Aufprall.

Es ist vorgesehen, dass die Seitenairbagvorrichtung 12 eine elektronische Recheneinrichtung 22 und ein weiteres Ablassventil 24 und/oder einen weiteren Gasgenerator aufweist, wobei mittels einer Erfassungseinrichtung 26 der Seitenairbagvorrichtung 12 ein Insasse 28 des Kraftfahrzeugs 10 erfasst wird, wobei die Seitenairbagvorrichtung 12 zum Schutz dieses Insassen 28 bei dem Aufprall mit dem Gas befüllt wird und die elektronische Recheneinrichtung 22 dazu ausgebildet ist, in Abhängigkeit von dem erfassten Insassen 28 einen Gasdruck im Gassack 14 durch Ansteuern des weiteren Ablassventils 24 und/oder des weiteren Gasgenerators vor dem Aufprall zu bestimmen und bei dem Aufprall an den Insassen 28 anzupassen.

Ferner kann vorgesehen sein, dass die elektronische Recheneinrichtung 22 dazu ausgebildet ist, in Abhängigkeit einer Größe des Insassen 28 und/oder eines Gewichts des Insassen 28 den Gasdruck zu bestimmen. Die elektronische Recheneinrichtung 22 kann ferner dazu ausgebildet sein, zusätzlich in Abhängigkeit von einer Aufprallintensität den Gasdruck im Gassack 14 einzustellen.

Weiterhin ist vorgesehen, dass das weitere Ablassventil 24 zumindest drei Öffnungsstellungen aufweist, wobei eine erste Öffnungsstellung ganzheitlich geöffnet ist, eine zweite Öffnungsstellung eine teilweise Öffnung, eine dritte Öffnungsstellung eine geschlossenen Zustand beschreibt und in Abhängigkeit von einem Steuersignal der elektronischen Recheneinrichtung 22 eine der Öffnungsstellungen bei dem Aufprall angesteuert wird. Zum Erzeugen der mindestens drei Öffnungsstellungen kann das weitere Ablassventil 24 zumindest eine Abdeckung aufweisen, welche in Abhängigkeit des Steuersignals bewegt ist.

Insgesamt ist somit vorgeschlagen, dass eine Gasdruckeinstellung bereits im Vorfeld des Aufpralls bestimmt und in Abhängigkeit der Größe beziehungsweise des Gewichts des Insassen 28 oder sonstiger Personen eingestellt wird, so dass im Falle des Aufpralls bereits bekannt ist, welcher Gasdruck, auch in Abhängigkeit der Aufprallintensität, im Seitenairbag eingestellt werden kann. Dies wird mit insbesondere dem weiteren Ablassventil 24 und/oder einer zweistufigen und/oder einem zweiten Gasgenerator durchgeführt.

Das weitere Ablassventil 24, welches insbesondere auch als adaptives Ventil bezeichnet werden kann, kann dann im Auslösefall entsprechend geschlossen, teils geöffnet oder ganz geöffnet sein. Dies kann beispielsweise durch Abdeckungen erreicht werden, die entsprechend hin- und herbewegt werden oder weitere Ventileinrichtungen.

Bei der Alternative des Gasgenerators wird dann das weitere Ablassventil 24 ersetzt oder ergänzt, so dass auch der Anfangsdruck durch den Gasgenerator bereits einstellbar ist und dies dann ebenfalls beispielsweise durch das adaptive Ventil abgelassen werden kann.

Insbesondere stellt das weitere Ablassventil 24 ein weiteres zusätzliches Ventil dar, um den Druck einzustellen, wobei die Ablassventile 18, 20 im Seitenairbag weiterhin zur Entlüftung des Airbags funktional dienen.

Die Seitenairbagvorrichtung 12 weist somit das adaptive Ventil auf, welches insbesondere ansteuerbar und damit einstellbar ist. Alternativ oder ergänzend weist die Seitenairbagvorrichtung 12 einen zweiten Gasgenerator beziehungsweise einen zweistufigen Gasgenerator auf, so dass ein Anfangsdruckniveau eingestellt werden kann.

Insgesamt zeigt die Erfindung einen Seitenairbag mit adaptiver Drucksteuerung.

## Patentansprüche

1. Seitenairbagvorrichtung (12) für ein Kraftfahrzeug (10) mit einem Gassack (14), in welchem bei einem Aufprall ein Gas mittels eines Gasgenerators (16) der Seitenairbagvorrichtung (12) eingebracht wird, und mit einem Ablassventil (18, 20) zum Entlüften von dem Gas unmittelbar nach dem Aufprall, wobei die Seitenairbagvorrichtung (12) eine elektronische Recheneinrichtung (22) aufweist, wobei mittels einer Erfassungseinrichtung (26) der Seitenairbagvorrichtung (12) ein Insasse (28) des Kraftfahrzeugs (10) erfasst wird, und wobei die Seitenairbagvorrichtung (12) zum Schutz dieses Insassen (28) bei dem Aufprall mit dem Gas befüllt wird,
**dadurch gekennzeichnet, dass**
die Seitenairbagvorrichtung (12) ein weiteres Ablassventil (24) aufweist, wobei die elektronische Recheneinrichtung (22) dazu ausgebildet ist, in Abhängigkeit von dem erfassten Insassen (28) einen Gasdruck im Gassack (14) durch Ansteuern des weiteren Ablassventils (24) vor dem Aufprall zu bestimmen und den Gasdruck bei dem Aufprall an den Insassen (28) anzupassen, wobei das weitere Ablassventil (24) zumindest drei Öffnungsstellungen aufweist, und wobei eine erste Öffnungsstellung ganzheitlich geöffnet ist, eine zweite Öffnungsstellung eine teilweise Öffnung und eine dritte Öffnungsstellung einen geschlossen Zustand beschreiben und in Abhängigkeit von einem Steuersignal der elektronischen Recheneinrichtung (22) eine der Öffnungsstellungen bei dem Aufprall angesteuert ist.

2. Seitenairbagvorrichtung (12) nach Anspruch 1,
**dadurch gekennzeichnet, dass**
die elektronische Recheneinrichtung (22) dazu ausgebildet ist, in Abhängigkeit einer Größe des Insassen (28) und/oder eines Gewichts des Insassen (28) den Gasdruck zu bestimmen.

3. Seitenairbagvorrichtung (12) nach Anspruch 1 oder 2,
**dadurch gekennzeichnet, dass**
die elektronische Recheneinrichtung (22) dazu ausgebildet ist, zusätzlich in Abhängigkeit von einer Aufprallintensität den Gasdruck im Gassack (14) einzustellen.

4. Seitenairbagvorrichtung (12) nach einem der vorhergehenden Ansprüche,
**dadurch gekennzeichnet, dass**
zum Erzeugen der zumindest drei Öffnungsstellungen das weitere Ablassventil (24) zumindest eine Abdeckung aufweist, welche in Abhängigkeit des Steuersignals bewegbar ist.

5. Verfahren zum Betreiben einer Seitenairbagvorrichtung (12) für ein Kraftfahrzeug (10), bei welchem bei einem Aufprall ein Gas mittels eines Gasgenerators (16) der Seitenairbagvorrichtung (12) in einen Gassack (14) der Seiteairbagvorrichtung (12) eingebracht wird, und bei welchem mittels eines Ablassventils (18, 20) das Gas unmittelbar nach dem Aufprall entlüftet wird, wobei die Seitenairbagvorrichtung (12) eine elektronische Recheneinrichtung (22) aufweist, wobei mittels einer Erfassungseinrichtung (26) der Seitenairbagvorrichtung (12) ein Insasse (28) des Kraftfahrzeugs (10) erfasst wird, und wobei die Seitenairbagvorrichtung (12) zum Schutz dieses Insassen (28) bei dem Aufprall mit dem Gas befüllt wird,
**dadurch gekennzeichnet, dass**
die Seitenairbagvorrichtung (12) ein weiteres Ablassventil (24) aufweist,wobei die elektronische Recheneinrichtung (22) in Abhängigkeit von dem erfassten Insassen (28) einen Gasdruck im Gassack (14) durch Ansteuern des weiteren Ablassventils (24) vor dem Aufprall bestimmt und der Gasdruck bei dem Aufprall an den Insassen (28) angepasst wird, wobei das weitere Ablassventil (24) zumindest drei Öffnungsstellungen aufweist, und wobei eine erste Öffnungsstellung ganzheitlich geöffnet ist, eine zweite Öffnungsstellung eine teilweise Öffnung und eine dritte Öffnungsstellung einen geschlossen Zustand beschreiben und in Abhängigkeit von einem Steuersignal der elektronischen Recheneinrichtung (22) eine der Öffnungsstellungen bei dem Aufprall angesteuert wird.

## Claims

1. Side airbag apparatus (12) for a motor vehicle (10), comprising a gas bag (14) in which, during an impact, a gas is introduced by means of a gas generator (16) of the side airbag apparatus (12), and comprising a release valve (18, 20) for venting the gas immediately after the impact, the side airbag apparatus (12) having an electronic computing device (22), an occupant (28) of the motor vehicle (10) being detected by means of a detection device (26) of the side airbag apparatus (12), and the side airbag apparatus (12) being filled with the gas in order to protect this occupant (28) during the impact,
**characterized in that**
the side airbag apparatus (12) has a further release valve (24), the electronic computing device (22) being configured, depending on the detected occupant (28), to determine a gas pressure in the gas bag (14) by actuating the further release valve (24) before the impact, and to adapt the gas pressure to the occupant (28) during the impact, the further release valve (24) having at least three opening positions, and a first opening position being fully open, a second opening position specifying a partial opening, and a third opening position specifying a closed state, and, depending on a control signal from the electronic computing device (22), one of the opening positions being actuated during the impact.

2. Side airbag apparatus (12) according to claim 1,
**characterized in that**
the electronic computing device (22) is configured to determine the gas pressure depending on a size of the occupant (28) and/or a weight of the occupant (28).

3. Side airbag apparatus (12) according to claim 1 or claim 2,
**characterized in that**
the electronic computing device (22) is configured to additionally adjust the gas pressure in the gas bag (14) depending on the impact intensity.

4. Side airbag apparatus (12) according to any of the preceding claims,
**characterized in that,**
in order to generate at least three opening positions, the further release valve (24) has at least one cover which is movable depending on the control signal.

5. Method for operating a side airbag apparatus (12) for a motor vehicle (10), in which method, during an impact, a gas is introduced into a gas bag (14) of the side airbag apparatus (12) by means of a gas generator (16) of the side airbag apparatus (12), and in which method the gas is vented immediately after the impact by means of a release valve (18, 20), the side airbag apparatus (12) having an electronic computing device (22), an occupant (28) of the motor vehicle (10) being detected by means of a detection device (26) of the side airbag apparatus (12), and the side airbag apparatus (12) being filled with the gas in order to protect this occupant (28) during the impact,
**characterized in that**
the side airbag apparatus (12) has a further release valve (24), the electronic computing device (22), depending on the detected occupant (28), determining a gas pressure in the gas bag (14) by actuating the further release valve (24) before the impact, and the gas pressure being adapted to the occupant (28) during the impact, the further release valve (24) having at least three opening positions, and a first opening position being fully open, a second opening position specifying a partial opening, and a third opening position specifying a closed state, and, depending on a control signal from the electronic computing device (22), one of the opening positions being actuated during the impact.

## Revendications

1. Dispositif formant sac gonflable latéral (12) pour un véhicule automobile (10) comportant un coussin à gaz (14) dans lequel, en cas de collision, un gaz est introduit au moyen d'un générateur de gaz (16) du dispositif formant sac gonflable latéral (12), et comportant une soupape d'évacuation (18, 20) pour l'évacuation du gaz immédiatement après la collision, dans lequel le dispositif formant sac gonflable latéral (12) présente un appareil de calcul électronique (22), dans lequel un passager (28) du véhicule automobile (10) est détecté au moyen d'un appareil de détection (26) du dispositif formant sac gonflable latéral (12), et dans lequel le dispositif formant sac gonflable latéral (12) est rempli du gaz pour protéger ledit passager (28) lors de l'impact,
**caractérisé en ce que**
le dispositif formant sac gonflable latéral (12) présente une autre soupape d'évacuation (24), dans lequel l'appareil de calcul électronique (22) est configuré pour déterminer, en fonction du passager (28) détecté, une pression de gaz dans le coussin à gaz (14) en commandant l'autre soupape d'évacuation (24) avant l'impact et pour adapter la pression de gaz au niveau du passager (28) lors de l'impact, dans lequel l'autre soupape d'évacuation (24) présente au moins trois positions d'ouverture, et dans lequel une première position d'ouverture est entièrement ouverte, une deuxième position d'ouverture décrit une ouverture partielle et une troisième position d'ouverture décrit un état fermé, et l'une des positions d'ouverture est commandée en fonction d'un signal de commande de l'appareil de calcul électronique (22) lors de l'impact.

2. Dispositif formant sac gonflable latéral (12) selon la revendication 1,
**caractérisé en ce que**
l'appareil de calcul électronique (22) est configuré pour déterminer la pression de gaz en fonction d'une taille du passager (28) et/ou d'un poids du passager (28).

3. Dispositif formant sac gonflable latéral (12) selon la revendication 1 ou 2,
**caractérisé en ce que**
l'appareil de calcul électronique (22) est en outre configuré pour régler la pression de gaz dans le coussin à gaz (14) en fonction d'une intensité d'impact.

4. Dispositif formant sac gonflable latéral (12) selon l'une des revendications précédentes,
**caractérisé en ce que**
pour la génération des au moins trois positions d'ouverture, l'autre soupape d'évacuation (24) présente au moins un élément de recouvrement qui peut être déplacé en fonction du signal de commande.

5. Procédé permettant de faire fonctionner un dispositif formant sac gonflable latéral (12) pour un véhicule automobile (10), dans lequel, en cas de collision, un gaz est introduit dans un coussin à gaz (14) du dispositif formant sac gonflable latéral (12) au moyen d'un générateur de gaz (16) du dispositif formant sac gonflable latéral (12), et dans lequel le gaz est évacué immédiatement après la collision au moyen d'une soupape d'évacuation (18, 20), dans lequel le dispositif formant sac gonflable latéral (12) présente un appareil de calcul électronique (22), dans lequel un passager (28) du véhicule automobile (10) est détecté au moyen d'un appareil de détection (26) du dispositif formant sac gonflable latéral (12), et dans lequel le dispositif formant sac gonflable latéral (12) est rempli du gaz pour protéger ledit passager (28) lors de l'impact,
**caractérisé en ce que**
le dispositif formant sac gonflable latéral (12) présente une autre soupape d'évacuation (24), dans lequel l'appareil de calcul électronique (22) détermine, en fonction du passager (28) détecté, une pression de gaz dans le coussin à gaz (14) en commandant l'autre soupape d'évacuation (24) avant l'impact et adapte la pression de gaz au niveau du passager (28) lors de l'impact, dans lequel l'autre soupape d'évacuation (24) présente au moins trois positions d'ouverture, et dans lequel une première position d'ouverture est entièrement ouverte, une deuxième position d'ouverture décrit une ouverture partielle et une troisième position d'ouverture décrit un état fermé, et l'une des positions d'ouverture est commandée en fonction d'un signal de commande de l'appareil de calcul électronique (22) lors de l'impact.
